# EUROPÄISCHE PATENTSCHRIFT

(11) **EP 1 637 734 B1**
(45) Veröffentlichungstag und Bekanntmachung des Hinweises auf die Patenterteilung: **10.10.2007**
(21) Anmeldenummer: 04022021.2
(22) Anmeldetag: 16.09.2004
(51) Int. Cl.: F03G 7/04, F24J 3/08

(54) **Verfahren zur Nutzung von Erdwärme**
Process for using geothermal heat
Procédé pour l'utilisation de la chaleur géothermique

(43) Veröffentlichungstag der Anmeldung: 22.03.2006
(73) Patentinhaber: ENRO GeothermieEntwicklung GmbH, 14974 Ludwigsfelde (DE)
(72) Erfinder: Bund, Karlheinz, Dr., 45133 Essen (DE)
(74) Vertreter: Rohmann, Michael

(56) Entgegenhaltungen:
- EP-A- 0 073 576
- WO-A-96/23181
- WO-A-98/22760
- WO-A-20/04094765
- DE-A1- 4 229 185
- GB-A- 2 041 041
- US-A- 3 957 108
- US-A- 4 022 025
- US-A- 4 074 754
- US-A- 4 458 492
- US-A- 5 072 783
- US-A- 5 311 741
- US-A- 5 515 679

## Beschreibung

Die Erfindung betrifft ein Verfahren zur Nutzung von Erdwärme, beispielsweise zur Stromerzeugung. Mit anderen Worten befasst sich die Erfindung gemäß einer Ausführungsform mit einem Verfahren zur geothermischen Stromerzeugung. Die Erdwärme kann aber auch für andere Anwendungszwecke ausgenutzt werden. Beispielsweise kann die Energie aus der Erdwärme an der Erdoberfläche zur Wasserstoffgewinnung verwendet werden.

Aus der Praxis sind verschiedene Verfahren zur Nutzung von Erdwärme bekannt. Ein Solches Verfahren ist beispielsweise aus der US 3 957 108 A bekannt. Der Wirkungsgrad dieser bekannten Verfahren lässt oft zu wünschen übrig. Fernerhin haben die bekannten Verfahren den Nachteil, dass sie sich entweder gar nicht oder nur mit großem Aufwand an die jeweiligen aktuellen Verhältnisse anpassen lassen. Bei den meisten bekannten Verfahren erfolgt die Gewinnung der Erdwärme nur in relativ kleinen Bereichen bzw. in eng bemessenen Bereichen im Erdreich. Bei der Durchleitung eines Wärmeträgermediums durch diese Bereiche erfolgt eine relativ rasche Abkühlung des Erdreiches bzw. des Gesteins. Dann muss das Verfahren entweder für längere Zeit unterbrochen werden oder die Wärmegewinnung lässt im Hinblick auf die Effektivität stark zu wünschen übrig. Außerdem ist die Arbeitsweise vieler bekannter Verfahren nur wenig flexibel bzw. variabel. Insbesondere ist eine gezielte Anpassung der Erdwärmegewinnung an den derzeitigen bzw. aktuellen Energiebedarf bzw. Strombedarf nicht oder mit nur sehr aufwendigen Mitteln möglich.

Demgegenüber liegt der Erfindung das technische Problem zugrunde, ein Verfahren anzugeben, mit dem Erdwärme mit hohem Wirkungsgrad genutzt werden kann und dass sich zusätzlich auf einfache Weise an die jeweiligen Verhältnisse, insbesondere auch an den aktuellen Energiebedarf, problemlos anpassen lässt.

Zur Lösung dieses technischen Problems lehrt die Erfindung ein Verfahren zur Nutzung von Erdwärme, insbesondere zur Stromerzeugung,
wobei ein Wärmeträgermedium durch Zuführungsleitungen in das Erdreich eingeführt wird und aus Austrittsöffnungen der Zuführungsleitungen in das Erdreich austritt,
wobei das Wärmeträgermedium von den Austrittsöffnungen über einen Strömungsabstand s das Erdreich durchdringend zu Abführungsöffnungen von Förderleitungen geführt wird und von den Förderleitungen abgefördert wird,
wobei das Wärmeträgermedium durch eine erste Erdwärmenutzungseinheit führbar ist, in der zumindest eine Austrittsöffnung und zumindest eine Abführungsöffnung auf unterschiedlich tiefem Niveau angeordnet sind,
wobei das Wärmeträgermedium durch eine zweite Erdwärmenutzungseinheit führbar ist, in der zumindest drei Austrittsöffnungen in einer linearen Reihe angeordnet sind und/oder in der zumindest drei Abführungsöffnungen in einer linearen Reihe angeordnet sind,
wobei das Wärmeträgermedium durch eine dritte Erdwärmenutzungseinheit führbar ist, in der zumindest drei Austrittsöffnungen um eine Abführungsöffnung mit jeweils gleichem Strömungsabstand s zur Abführungsöffnung verteilt angeordnet sind und/oder in der zumindest drei Abführungsöffnungen um eine Austrittsöffnung mit jeweils gleichem Strömungsabstand s zur Austrittsöffnung verteilt angeordnet sind,
und wobei das Wärmeträgermedium durch zumindest zwei der Erdwärmenutzungseinheiten alternierend geführt wird.

Strömungsabstand s meint im Rahmen der Erfindung den Abstand einer Austrittsöffnung zu ihrer zugeordneten Abführungsöffnung. Zugeordnete Abführungsöffnung meint dabei die Abführungsöffnung, durch die zumindest 50 Gew.-% des aus der betreffenden Austrittsöffnung austretenden Wärmeträgermediums wieder abgefördert wird. Wenn sich Austrittsöffnung und zugeordnete Abführungsöffnung auf unterschiedlichem Tiefenniveau befinden, so meint der Strömungsabstand s den horizontalen Abstand zwischen der Austrittsöffnung und der auf das gleiche tiefe Niveau gedachten Abführungsöffnung.

Alternierende Führung des Wärmeträgermediums durch die Erdwärmenutzungseinheiten meint insbesondere, dass das Wärmeträgermedium zuerst durch zumindest eine Erdwärmenutzungseinheit geführt wird, dass anschließend zeitweise kein Wärmeträgermedium mehr durch diese Erdwärmenutzungseinheit geleitet wird und dass stattdessen das Wärmeträgermedium durch zumindest eine weitere Erdwärmenutzungseinheit geführt wird. Es liegt im Rahmen der Erfindung, dass das Wärmeträgermedium bei der erfindungsgemäßen alternierenden Führung zunächst in die erste (oder die zweite oder die dritte) Erdwärmenutzungseinheit eingeführt wird und im Erdreich durch die Erdwärme aufgeheizt wird sowie anschließend über zumindest eine Förderleitung an die Erdoberfläche zurückgeführt wird, wo eine Umwandlung der Wärmeenergie, beispielsweise in elektrische Energie, stattfindet. Danach wird die zuerst durchströmte Erdwärmenutzungseinheit zeitweise nicht mehr vom Wärmeträgermedium durchströmt. Stattdessen wird das Wärmeträgermedium im Rahmen der alternierenden Führung dann in die zweite (oder die erste oder die dritte) Erdwärmenutzungseinheit eingeführt, im Erdreich wieder aufgeheizt und dann über zumindest eine Förderleitung wiederum an die Erdoberfläche zurückgeführt, wo eine Umwandlung der Wärmeenergie stattfindet. Daraufhin wird zweckmäßigerweise die zuletzt durchströmte Erdwärmenutzungseinheit zeitweise nicht mehr vom Wärmeträgermedium durchströmt und das Wärmeträgermedium wird stattdessen wieder in die zuerst durchströmte Erdwärmenutzungseinheit eingeführt oder in eine weitere Erdwärmenutzungseinheit eingeführt, während die zuerst durchströmte Erdwärmenutzungseinheit sowie die danach durchströmte Erdwärmenutzungseinheit zeitweise nicht vom Wärmeträgermedium durchströmt werden. Grundsätzlich liegt es auch im Rahmen der Erfindung, dass das Wärmeträgermedium zunächst im Kreislauf mehrmals durch eine Erdwärmenutzungseinheit geführt wird und erst danach in eine weitere Erdwärmenutzungseinheit eingeführt wird, wobei das Wärmeträgermedium dann diese weitere Erdwärmenutzungseinheit ebenfalls mehrmals im Kreislauf durchströmen kann.

Nach sehr bevorzugter Ausführungsform der Erfindung wird das Wärmeträgermedium alternierend durch alle drei Wärmenutzungseinheiten geführt. Die Reihenfolge der alternierenden Führung des Wärmeträgermediums wird dabei zweckmäßigerweise an die jeweiligen Verhältnisse angepasst. Beispielsweise kann das Wärmeträgermedium zuerst durch die erste Erdwärmenutzungseinheit geführt werden, danach zur Erdoberfläche zurückgeleitet werden, anschließend in die zweite Erdwärmenutzungseinheit eingeführt werden, dann wieder zur Erdoberfläche zurückgeführt werden und daraufhin in die dritte Erdwärmenutzungseinheit eingeführt werden und nach Zurückleiten an die Erdoberfläche dann wieder in die erste Erdwärmenutzungseinheit geführt werden. Während das Wärmeträgermedium bei dieser Verfahrensführung durch eine Erdwärmenutzungseinheit strömt, wird zweckmäßigerweise zumindest eine andere Erdwärmenutzungseinheit, vorzugsweise beide andere Erdwärmenutzungseinheiten des Triplets der Erdwärmenutzungseinheiten nicht vom Wärmeträgermedium durchströmt.

Der Erfindung liegt die Erkenntnis zugrunde, dass bei einer zeitweisen Abkühlung eines vom Wärmeträgermedium durchströmten Bereiches einer Erdwärmenutzungseinheit eine weitere Erdwärmenutzungseinheit in Betrieb genommen werden kann, in der diese Abkühlung noch nicht stattgefunden hat bzw. in der ein Temperaturausgleich stattgefunden hat, so dass hier das Wärmeträgermedium wieder effektiv aufgeheizt werden kann. - Es liegt auch im Rahmen der Erfindung, dass zur Anpassung an die jeweiligen Verhältnisse eine oder mehrere Zuführungsleitungen mit ihren Austrittsöffnungen zugeschaltet oder abgeschaltet werden können. Ebenso kann eine entsprechende Zuschaltung oder Abschaltung von Förderleitungen mit ihren Abführungsöffnungen stattfinden.

Nach besonders bevorzugter Ausführungsform der Erfindung wird die alternierende Verfahrenführung in Abhängigkeit von Temperaturmessungen eingestellt. Dabei wird vorzugsweise die Temperatur des aus einer Erdwärmenutzungseinheit an die Erdoberfläche zurückgeleiteten Wärmeträgermediums gemessen. Grundsätzlich kann aber auch die Temperatur des Erdreichs bzw. des Gesteins im Bereich einer Erdwärmenutzungseinheit gemessen werden. Vorzugsweise findet eine solche Temperaturmessung kontinuierlich für alle erfindungsgemäßen Erdwärmenutzungseinheiten statt. Zweckmäßigerweise sind dazu geeignete Temperaturmesseinrichtungen vorgesehen.

Der Erfindung liegt die Erkenntnis zugrunde, dass nach dem Durchströmen eines Erdreichsabschnittes mit dem Wärmeträgermedium eine zeitweise nicht unerhebliche Abkühlung diese Erdreichabschnittes stattfindet. Dadurch kann sich nachfolgend in das Erdreich eingeleitetes Wärmeträgermedium evtl. nicht mehr ausreichend stark aufheizen. Durch die alternierende Verfahrensführung und insbesondere durch die Anpassung der Verfahrensführung an die jeweils gemessenen Erdreichtemperaturen kann eine überraschend effektive Nutzung der Erdwärme und ein überraschend hoher Wirkungsgrad erzielt werden. Der Erfindung liegt weiterhin die Erkenntnis zugrunde, dass dazu insbesondere die drei Erdwärmenutzungseinheiten zur Durchführung des erfindungsgemäßen Verfahrens sehr wirksam beitragen.

Nach besonders bevorzugter Ausführungsform der Erfindung wird das Wärmeträgermedium mit der Maßgabe alternierend durch die Erdwärmenutzungseinheiten geführt, dass die Menge der pro Zeiteinheit gewonnenen Erdwärme dem jeweiligen bzw. dem momentanen Energiebedarf angepasst wird. Hierzu wird zweckmäßigerweise die Reihenfolge, in der das Wärmeträgermedium die Erdwärmenutzungseinheiten durchströmt, entsprechend festgelegt bzw. eingestellt. Im Rahmen des erfindungsgemäßen Verfahrens erfolgt somit die Nutzung der Erdwärme gleichsam im Rhythmus des Energiebedarfs bzw. des Verbrauchsbedarfs. Das gilt insbesondere für die bevorzugte Ausführungsform der Erfindung, bei der die Erdwärme zur Stromerzeugung genutzt wird. Die Stromerzeugung kann mit dem erfindungsgemäßen Verfahren sehr gezielt dem Bedarf der Stromverbraucher zum jeweiligen Zeitpunkt angepasst werden. Auch in diesem Zusammenhang zeichnen sich die eingesetzten drei Erdwärmenutzungseinheiten zur Durchführung des erfindungsgemäßen Verfahrens durch besondere Vorteile aus. Es versteht sich im Übrigen, dass im Rahmen des erfindungsgemäßen Verfahrens auch mehrere erste Erdwärmenutzungseinheiten und/oder mehrere zweite Erdwärmenutzungseinheiten und/oder mehrere dritte Erdwärmenutzungseinheiten eingesetzt werden können.

Grundsätzlich liegt es auch im Rahmen der Erfindung, dass die drei Erdwärmenutzungseinheiten zur Durchführung des erfindungsgemäßen Verfahrens mit weiteren aus dem Stand der Technik bekannten Erdwärmenutzungseinheiten kombiniert werden können. Diese bekannten Erdwärmenutzungseinheiten werden dann zweckmäßigerweise in die alternierende Verfahrensweise mit einbezogen.

Eine Zuführungsleitung kann auch mehrere Austrittsöffnungen aufweisen und eine Förderleitung kann mehrere Abführungsöffnungen aufweisen. Es liegt im Rahmen der Erfindung, dass die Zuführungsleitungen und/oder die Förderleitungen vertikal bzw. im Wesentlichen vertikal in das Erdreich eingebracht sind.

Erdreich meint im Rahmen der Erfindung vor allem Gestein und insbesondere kristallines Gestein, wie beispielsweise Granit oder Gneise. Mit Erdreich sind aber auch hochpermeable Gesteinsschichten, sogenannte Aquifere, gemeint. Der Begriff Erdreich umfasst im Rahmen der Erfindung fernerhin auch sogenannte Störungszonen. Dabei handelt es sich um Bruchzonen oder Bruchflächen, die in Sedimentgestein wie kristallinem Gestein auftreten können. Die Austrittsöffnungen und die Abführungsöffnungen für das Wärmeträgermedium sind zweckmäßigerweise in einer Tiefe von 1.500 m bis 7.000 m, vorzugsweise von 2.000 m bis 7.000 m und bevorzugt von 3.000 m bis 7.000 angeordnet. Nach einer sehr bevorzugten Ausführungsform der Erfindung sind die Austrittsöffnungen und/oder die Abführungsöffnungen in einer Tiefe von 3.500 m bis 6.000 m vorgesehen.

Vorzugsweise wird ein flüssiges Wärmeträgermedium durch die Erdwärmenutzungseinheiten geführt. Nach sehr bevorzugter Ausführungsform der Erfindung wird Wasser als Wärmeträgermedium verwendet.

Vorzugsweise beträgt der Strömungsabstand s von einer Austrittsöffnung zu der zugeordneten Abführungsöffnung 200 m bis 800 m, vorzugsweise 300 m bis 700 m. Zweckmäßigerweise beträgt der Strömungsabstand s zwischen einer Austrittsöffnung und einer Abführungsöffnung 350 m bis 650 m, beispielsweise 500 m.

Nach besonders bevorzugter Ausführungsform der Erfindung ist eine Abführungsöffnung der ersten Erdwärmenutzungseinheit auf tieferem Niveau angeordnet als die Austrittsöffnung. Vorzugsweise ist dabei zwischen Austrittsöffnung und Abführungsöffnung eine Tiefendifferenz Δt vorgesehen, die zumindest ein Zwanzigstel, bevorzugt zumindest ein Fünfzehntel und sehr bevorzugt zumindest ein Zehntel des Strömungsabstandes s beträgt. - Nach einer Ausführungsform der Erfindung gehört einer ersten Erdwärmenutzungseinheit lediglich eine einzige Zuführungsleitung mit vorzugsweise einer Austrittsöffnung und eine einzige Förderleitung mit vorzugsweise einer Abführungsöffnung an. Die Zuführungsleitung kann aber auch mehrere Austrittsöffnungen aufweisen und die Förderleitung kann mehrere Abführungsöffnungen aufweisen. Bei der vorstehend erläuterten Ausführungsform der ersten Erdwärmenutzungseinheit mit lediglich einer Zuführungsleitung und lediglich einer Förderleitung wird zweckmäßigerweise ein Strömungsabstand s von 200 m bis 500 m, bevorzugt von 200 m bis 400 m, gewählt.

Vorzugsweise tritt das Wärmeträgermedium in der zweiten Erdwärmenutzungseinheit über mehr als drei in einer linearen Reihe angeordnete Austrittsöffnungen in das Erdreich aus und das Wärmeträgermedium wird von den Austrittsöffnungen über den Strömungsabstand s das Erdreich durchdringend zu mehr als drei in einer linearen Reihe angeordneten Abführungsöffnungen geführt. Eine sehr bevorzugte Ausführungsform ist dadurch gekennzeichnet, dass eine Mehrzahl von Austrittsöffnungen an einer einzigen Zuführungsleitung angeschlossen wird. Dabei können alle Austrittsöffnungen in einer linearen Reihe lediglich an einer einzigen Zuführungsleitung angeschlossen sein. Es liegt im Rahmen der Erfindung, dass Austrittsöffnungen und Zuführungsleitungen gleichsam rechenartig bzw. rechenbesenartig angeordnet sind. Dabei bildet die Zuführungsleitung den Rechenstiel und die einzelnen den Austrittsöffnungen zugeordneten Austrittsleitungen bilden die Zinken des Rechens bzw. des Rechenbesens. Vorzugsweise sind zumindest drei Austrittsöffnungen einer linearen Reihe an eine einzige Zuführungsleitung angeschlossen.

Nach bevorzugter Ausführungsform der Erfindung werden die Austrittsöffnungen der zweiten Erdwärmenutzungseinheit in einer sich über eine Strecke von 500 m bis 1.500 m, vorzugsweise von 750 m bis 1.200 m, erstreckenden linearen Reihe angeordnet. Besonders bevorzugt ist eine Länge von 800 m bis 1.200 m, beispielsweise von 1.000 m für eine lineare Reihe von Austrittsöffnungen. Die vorstehend für eine lineare Reihe von Austrittsöffnungen angegebenen Längen treffen vorzugsweise auch für die Länge einer linearen Reihe von Abführungsöffnungen zu. Es liegt im Rahmen der Erfindung, dass die Austrittsöffnungen und/oder die Abführungsöffnungen in einer linearen Reihe jeweils gleichmäßig verteilt sind und insbesondere gleiche Abstände bzw. im Wesentlichen gleiche Abstände voneinander aufweisen.

Zweckmäßigerweise wird eine lineare Reihe von Austrittsöffnungen und eine lineare Reihe von Abführungsöffnungen mit einem Strömungsabstand s von 200 m bis 800 m, vorzugsweise von 300 m bis 700 m und sehr bevorzugt von 400 m bis 600 m, voneinander angeordnet.

Es liegt im Rahmen der Erfindung, dass eine Mehrzahl von Abführungsöffnungen an eine einzige Förderleitung angeschlossen wird. Vorzugsweise wird eine rechenartige bzw. rechenbesenartige Anordnung von Förderleitung und von den Abführungsöffnungen zugeordneten Abführungsleitungen realisiert. Die Förderleitung bildet dabei gleichsam den Rechenstiel und die Abführungsleitungen mit ihren Abführungsöffnungen bilden die Zinken des Rechens bzw. Rechenbesens. Es liegt im Rahmen der Erfindung, dass zumindest drei Abführungsleitungen mit ihren Abführungsöffnungen an eine einzige Förderleitung angeschlossen sind.

Eine sehr bevorzugte Ausführungsform der zweiten Erdwärmenutzungseinheit ist dadurch gekennzeichnet, dass die Austrittsöffnungen und die Abführungsöffnungen mit der Maßgabe angeordnet werden, dass jeder Austrittsöffnung zumindest eine Abführungsöffnung zugeordnet ist. Vorzugsweise ist jeder Austrittsöffnung einer linearen Reihe von Austrittsöffnungen eine einzige Abführungsöffnung in der benachbarten linearen Reihe von Abführungsöffnungen zugeordnet. Grundsätzlich liegt es aber auch im Rahmen der Erfindung, dass eine Austrittsöffnung in einer linearen Reihe von Austrittsöffnungen ein bis fünf Abführungsöffnungen in einer benachbarten linearen Reihe von Abführungsöffnungen zugeordnet sind und umgekehrt. - Wie oben bereits dargelegt, ist im Rahmen der Erfindung eine Abführungsöffnung einer Austrittsöffnung zugeordnet, wenn zumindest 50 Gew.-% des aus der Austrittsöffnung austretenden Wärmeträgermediums durch diese Abführungsöffnung abgefördert werden. Wenn einer Austrittsöffnung mehrere Abführungsöffnungen zugeordnet sind, meint dies, dass zumindest 50 Gew.-% des aus der Austrittsöffnung austretenden Wärmeträgermediums durch die mehreren zugeordneten Abführungsöffnungen abgefördert wird.

Nach einer besonders bevorzugten Ausführungsform der Erfindung ist zumindest ein Teil der Abführungsöffnungen, vorzugsweise alle Abführungsöffnungen, einer linearen Reihe von Abführungsöffnungen tiefer bzw. auf tieferem Niveau angeordnet als die Austrittsöffnungen einer benachbarten linearen Reihe von Austrittsöffnungen. Auf diese Weise kann eine besonders vorteilhafte Strömung mit sehr effektivem Wärmeaustausch verwirklicht werden. Bei einem Strömungsabstand von 200 m bis 800 m liegen die Abführungsöffnungen vorzugsweise mindestens 20 m tiefer, bevorzugt mindestens 50 m tiefer als die Austrittsöffnungen.

Zweckmäßigerweise ist zumindest eine lineare Reihe von Austrittsöffnungen parallel oder im Wesentlichen parallel zu zumindest einer linearen Reihe von Abführungsöffnungen angeordnet. Im Wesentlichen parallel meint dabei vorzugsweise, dass zwischen einer linearen Reihe von Austrittsöffnungen und einer linearen Reihe von Abführungsöffnungen höchstens ein Winkel von 30°, vorzugsweise höchstens ein Winkel von 20°und sehr bevorzugt höchstens ein Winkel von 15°, gebildet wird.

Eine sehr bevorzugte Ausführungsform der zweiten Erdwärmenutzungseinheit ist dadurch gekennzeichnet, dass eine mittige lineare Reine von Abführungsöffnungen vorgesehen ist und dass rechts und links von dieser mittigen linearen Reihe jeweils eine lineare Reihe von Austrittsöffnungen vorgesehen ist. Dabei sind die drei linearen Reihen zweckmäßigerweise parallel oder im Wesentlichen parallel zueinander angeordnet. Außerdem hat vorzugsweise die linke lineare Reihe von Austrittsöffnungen den gleichen Strömungsabstand wie die rechte lineare Reihe von Austrittsöffnungen zu der mittigen linearen Reihe von Abführungsöffnungen.

Bei der dritten Erdwärmenutzungseinheit sind mehrere Zuführungsleitungen bzw. ihre Austrittsöffnungen um eine Förderleitung bzw. um ihre Abführungsöffnung verteilt angeordnet. Dabei liegt es im Rahmen der Erfindung, dass mehr als drei, vorzugsweise zumindest vier und besonders bevorzugt zumindest sechs, Austrittsöffnungen um eine Abführungsöffnung mit jeweils gleichem Strömungsabstand s zur Abführungsöffnung verteilt angeordnet sind. Nach bevorzugter Ausführungsform der Erfindung haben benachbarte Austrittsöffnungen der um die Förderleitung verteilten Austrittsöffnungen jeweils den gleichen Abstand voneinander. Es liegt im Rahmen der Erfindung, dass bei der dritten Erdwärmenutzungseinheit eine Austrittsöffnung und eine Abführungsöffnung mit einem gegenseitigen Strömungsabstand s von 200 m bis 800 m, vorzugsweise von 300 m bis 700 m und sehr bevorzugt von 350 m bis 650 m, voneinander angeordnet werden.

Nach sehr bevorzugter Ausführungsform der Erfindung werden die Öffnungen mit der Maßgabe angeordnet, dass die Abführungsöffnung bezüglich einer (gedachten) horizontalen Schnittfläche (Schnittebene) den Mittelpunkt eines mittleren Polygons bildet und zumindest ein Teil der Austrittsöffnungen bildet jeweils den Mittelpunkt eines identischen äußeren Polygons, welches äußere Polygon an das mittlere Polygon unmittelbar angrenzt bzw. anschließt. Die (gedachten) Polygone liegen also in der horizontalen Schnittfläche/Schnittebene und sind in der Draufsicht auf die Schnittfläche/Schnittebene erkennbar.

Wenn Austrittsöffnungen und Abführungsöffnung auf unterschiedlichem Tiefenniveau liegen, wird dabei vereinfachend angenommen, dass die Polygone in derselben horizontalen Schnittfläche/Schnittebene liegen. Bei einem Polygon handelt es sich um ein Vieleck mit zumindest drei Seiten und vorzugsweise mit mehr als drei Seiten. Identisches äußeres Polygon meint, dass ein äußeres Polygon im Hinblick auf die Eckenanzahl, die Seitenanzahl und die Fläche mit dem mittleren Polygon übereinstimmt. Vorzugsweise bildet jede der um eine Abführungsöffnung herum angeordneten Austrittsöffnungen den Mittelpunkt eines äußeren Polygons, das mit dem mittleren Polygon (mit der Abführungsöffnung) identisch ist und an das mittlere Polygon unmittelbar angrenzt. Es liegt im Rahmen der Erfindung, dass das mittlere Polygon von dem äußeren Polygon vollständig umgeben bzw. umschlossen wird. Es handelt sich dabei also um an das mittlere Polygon allseitig angrenzende äußere Polygone. Nach besonders bevorzugter Ausführungsform der Erfindung ist das mittlere Polygon ein Sechseck und sind auch die äußeren Polygone Sechsecke. Dass eine Öffnung im Mittelpunkt eines Polygons liegt, meint im Rahmen der Erfindung auch, dass die Öffnung ungefähr bzw. in etwa im Mittelpunkt des Polygons angeordnet ist.

Nach einer Ausführungsform der Erfindung ist der Innendurchmesser der Förderleitung größer als der Innendurchmesser einer Zuführungsleitung. Es liegt aber auch im Rahmen der Erfindung, dass der Innendurchmesser der Förderleitung gleich oder kleiner ist als der Innendurchmesser einer Zuführungsleitung. Dann wird das von den Zuführungsleitungen zufließende und im Erdreich erwärmte Trägermedium zweckmäßigerweise mit einer entsprechend hohen Förderleistung bzw. Pumpleistung durch die Förderleitung an die Erdoberfläche befördert. Zweckmäßigerweise wird das Verfahren so geführt, dass das von einer Zuführungsleitung zugeführte Wärmeträgermedium das Erdreich in der Nähe der Austrittsöffnung zunächst langsamer durchströmt und dass dann die Strömungsgeschwindigkeit zur Mitte bzw. zur Abführungsöffnung hin größer wird. Vorzugsweise findet eine kontinuierliche Erhöhung der Strömungsgeschwindigkeit des Wärmeträgermediums von einer Austrittsöffnung zu der Abführungsöffnung hin statt. Um die vorstehend erläuterten Strömungsgeschwindigkeiten zu realisieren, wird insbesondere der Innendurchmesser der Zuführungsleitungen und/oder der Innendurchmesser der Förderleitung und/oder der durch jede Zuführungsleitung zugeführte Volumenstrom und/oder der durch die Förderleitung abgeführte Volumenstrom und/oder die Zuführungsförderleistung bzw. Pumpleistung einer Zuführungsleitung und/oder die Abführungsförderleistung bzw. Pumpleistung einer Förderleitung entsprechend eingestellt.

Eine Ausführungsform der Erfindung ist dadurch gekennzeichnet, dass die Abführungsöffnung der dritten Erdwärmenutzungseinheit auf einem tieferen Niveau im Erdreich angeordnet ist als die Austrittsöffnungen der Zuführungsleitungen. Vorzugsweise ist eine Abführungsöffnung um eine Tiefendifferenz Δt tiefer als eine Austrittsöffnung angeordnet, welche Tiefendifferenz Δt zumindest ein Zwanzigstel, vorzugsweise zumindest ein Fünfzehntel und bevorzugt zumindest ein Zehntel, des Strömungsabstandes s beträgt.

Es liegt im Rahmen der Erfindung, dass das Wärmeträgermedium das Erdreich bzw. das Gestein leitungsfrei durchströmt. Mit anderen Worten hat das Wärmeträgermedium beim Durchströmen des Erdreiches unmittelbaren Kontakt zum Erdreich bzw. zum Gestein, und zwar vorzugsweise in allen drei Erdwärmenutzungseinheiten zur Durchführung des erfindungsgemäßen Verfahrens. - Zweckmäßigerweise wird das Erdreich zwischen den Austrittsöffnungen und der Abführungsöffnung zur Erzeugung von Strömungskanälen für das Wärmeträgermedium künstlich aufgebrochen. Durch dieses künstliche Aufbrechen werden neue Hohlräume (Risse, Rissflächen, Klüfte, Poren und dergleichen) im Erdreich geschaffen bzw. bestehende Hohlräume erweitert, so dass Strömungskanäle zur Verfügung stehen, durch die das Wärmeträgermedium von den Austrittsöffnungen zu den Abführungsöffnungen strömen kann. Ein solches künstliches Aufbrechen findet insbesondere statt, wenn es sich bei dem Erdreich um Gestein bzw. kristallines Gestein handelt. Das künstliche Aufbrechen dieses kristallinen Gesteins ist auch unter der Bezeichnung "Hot-Dry-Rock-Verfahren" (HDR-Verfahren) bekannt. Zweckmäßigerweise wird im Rahmen der Erfindung zum künstlichen Aufbrechen des Erdreichs bzw. des Gesteins das an sich bekannte sogenannte "Hydraulic-Fracturing-Verfahren" angewendet. Dabei wird eine Flüssigkeit, vorzugsweise Wasser unter hohem Druck, in das Erdreich bzw. in das Gestein verpresst. Durch diesen hohen Druck und die im Gestein herrschenden Spannungen können dann Risse bzw. Rissflächen erzeugt werden oder aber auch bestehende Risse bzw. Rissflächen aufgeweitet werden. Durch das künstliche Aufbrechen des Erdreiches bzw. des Gesteins wird die hydraulische Durchlässigkeit des Erdreiches erhöht. Dadurch kann die Fließrate des Wärmeträgermediums über den Strömungsabstand s zwischen einer Austrittsöffnung und einer Abführungsöffnung gesteigert werden. Das erfindungsgemäße Verfahren wird bevorzugt mit der Maßgabe durchgeführt, dass über den Strömungsabstand s zwischen einer Austrittsöffnung und einer Abführungsöffnung eine Mindestfließrate von 50 m³h verwirklicht wird.

Vorzugsweise wird das Wärmeträgermedium mit zumindest einer Fördereinrichtung in eine Zuführungsleitung eingepresst bzw. eingedrückt und/oder wird das Wärmeträgermedium mit zumindest einer Fördereinrichtung über die Förderleitung wieder an die Erdoberfläche befördert. Bei einer Fördereinrichtung handelt es sich zweckmäßigerweise um eine geeignete Pumpe.

Das aufgewärmte bzw. aufgeheizte Wärmeträgermedium wird nach Durchströmen einer Erdwärmenutzungseinheit in der Regel an der Erdoberfläche für eine Energieumwandlung verwendet. Nach sehr bevorzugter Ausführungsform der Erfindung wird das aufgeheizte Wärmeträgermedium zur Stromerzeugung bzw. zur Gewinnung von elektrischer Energie eingesetzt. Dabei wird die von dem Wärmeträgermedium beförderte Wärmeenergie in mechanische Energie umgewandelt. Dazu wird zweckmäßigerweise Dampf bei hoher Temperatur und hohem Druck über zumindest eine Turbine geleitet. Der Dampf wird dabei abgekühlt und entspannt. Die Turbine treibt einen Generator an, mit dem die mechanische Energie in elektrische Energie umgewandelt wird. Nach einer Ausführungsform der Erfindung wird für das Medium, das dampfförmig eine Turbine antreiben soll, ein Medium eingesetzt, das einen geringeren Siedepunkt als Wasser hat. Vorzugsweise handelt es sich bei diesem Medium um eine organische Flüssigkeit mit niedrigerem Siedepunkt als Wasser, beispielsweise um einen Kohlenwasserstoff wie n-Pentan oder Isobutan. Zweckmäßigerweise wird in einem Wärmetauscher die Wärmeenergie von dem Wärmeträgermedium auf das die Turbine antreibende Medium übertragen. Vorzugsweise zirkuliert die organische Flüssigkeit in einem geschlossenen Kreislauf. Das bei der Wärmeübertragung abgekühlte Wärmeträgermedium wird anschließend bevorzugt wieder in eine Erdwärmenutzungseinheit eingeleitet bzw. eingepresst, und zwar nach bevorzugter Ausführungsform in eine andere Erdwärmenutzungseinheit. Nach besonders bevorzugter Ausführungsform der Erfindung wird also das Wärmeträgermedium, vorzugsweise Wasser, in einem geschlossenen Kreislauf geführt.

Der Erfindung liegt die Erkenntnis zugrunde, dass mit dem erfindungsgemäßen Verfahren auf einfache Weise ein sehr effektiver Wärmeaustausch bzw. eine sehr effektive Übertragung von Erdwärme auf das Wärmeträgermedium möglich ist. Mit anderen Worten ist die Wärmeausbeute bezüglich der im Erdreich auf das Wärmeträgermedium übertragenen Wärme überraschend hoch. Mit anderen Worten kann eine relativ hohe Wärmemenge an die Erdoberfläche befördert werden und das ist im Vergleich zu aus dem Stand der Technik bekannten Maßnahmen relativ einfach und mit verhältnismäßig geringem Aufwand durchführbar. Von besonderem Vorteil ist fernerhin, dass im Rahmen des erfindungsgemäßen Verfahrens ein hoher Wirkungsgrad bei der Gewinnung von elektrischer Energie aus Erdwärme erreichbar ist. Die erfindungsgemäße Energiegewinnung bzw. Energieumwandlung ist dabei ausgesprochen umweltfreundlich, zumal Kohlendioxidimmissionen bei der Nutzung der Erdwärme nicht anfallen. Damit wird mit der Anwendung des erfindungsgemäßen Verfahrens ein wesentlicher Beitrag zum Klimaschutz geleistet. Von besonderer Bedeutung ist im Rahmen der Erfindung, dass durch die alternierende Verfahrensweise eine überraschend hohe Wärmeausbeute und ein hoher Wirkungsgrad erzielt wird. Dabei ist es sehr wesentlich, dass durch den alternierenden Einsatz der Erdwärmenutzungseinheiten zur Durchfürung des erfindungsgemäßen Verfahrens die Energieausbeute bzw. der Energiegewinn sehr gezielt an dem momentanen Energiebedarf bzw. Strombedarf angepasst werden kann. Eine diesbezügliche Steuerung und/oder Regelung des erfindungsgemäßen Verfahrens ist auf einfache Weise möglich.

Nachfolgend wird die Erfindung anhand einer lediglich ein Ausführungsbeispiel darstellenden Zeichnung näher erläutert. Es zeigen in schematischer Darstellung:
- Fig. 1: einen Schnitt durch eine erste Erdwärmenutzungseinheit zur Durchführung des erfindungsgemäßen Verfahrens,
- Fig. 2: einen Schnitt durch eine zweite bzw. eine dritte Erdwärmenutzungseinheit zur Durchführung des erfindungsgemäßen Verfahrens,
- Fig. 3: schematisch die Verteilung der Austrittsöffnungen und Abführungsöffnungen für die zweite Erdwärmenutzungseinheit und
- Fig. 4: schematisch die Verteilung der Austrittsöffnungen und Abführungsöffnungen für die dritte Erdwärmenutzungseinheit.

Die Figuren zeigen eine Vorrichtung zur Durchführung des erfindungsgemäßen Verfahrens zur Nutzung von Erdwärme, insbesondere zur Stromerzeugung. Ein nicht näher dargestelltes Wärmeträgermedium wird durch eine Zuführungsleitung 1 bzw. durch Zuführungsleitungen 1 in das Erdreich eingeführt. Bei dem Wärmeträgermedium handelt es sich vorzugsweise um Wasser. In einer Tiefe t, die im Ausführungsbeispiel 3.500 m betragen mag, tritt dann das über die Zuführungsleitungen 1 zugeführte Wärmeträgermedium über eine Austrittsöffnung 2 bzw. über Austrittsöffnungen 2 in das Erdreich aus. Vorzugsweise und im Ausführungsbeispiel nach den Figuren ist jeder Zuführungsleitung 1 lediglich eine einzige Austrittsöffnung 2 zugeordnet. Das Wärmeträgermedium strömt von einer Austrittsöffnung 2 über einen Strömungsabstand s durch das Erdreich und wird dort durch die Erdwärme gleichsam erwärmt bzw. aufgeheizt und strömt dann zu einer Abführungsöffnung 3. Die Abführungsöffnung 3 befindet sich am unteren Ende einer Förderleitung 4 und durch diese Förderleitung 4 wird das erwärmte Wärmeträgermedium wieder an die Erdoberfläche 5 zurückbefördert.

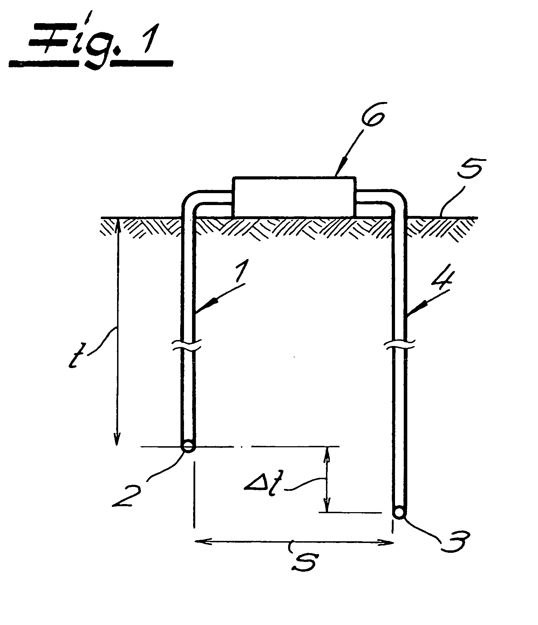

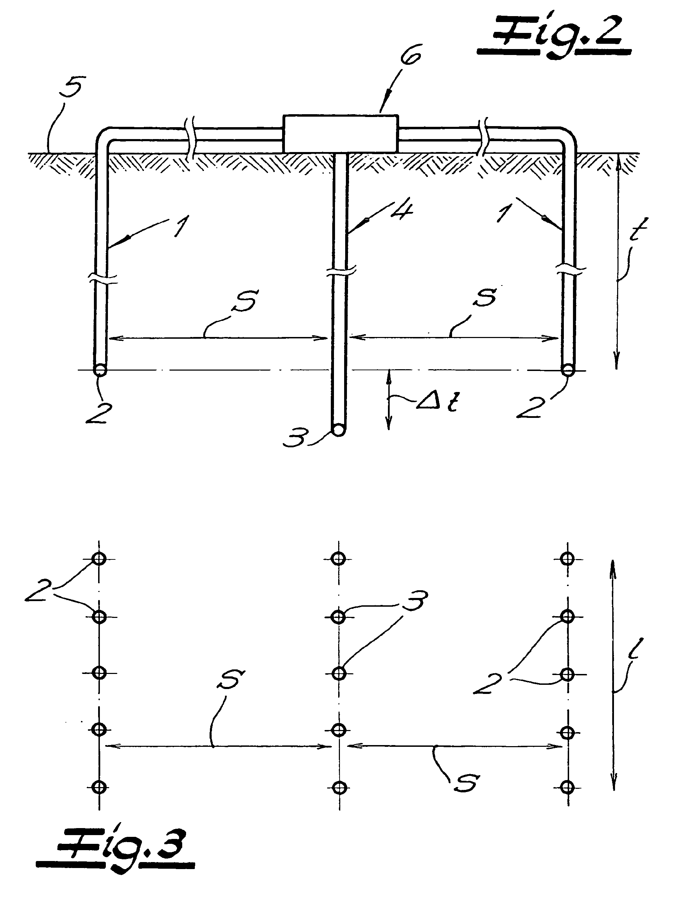

In den Fig. 1 und 2 ist erkennbar, dass im Ausführungsbeispiel bei allen eingesetzten Erdwärmenutzungseinheiten eine Abführungsöffnung 3 tiefer liegt bzw. auf einem tieferen Niveau angeordnet ist als eine Austrittsöffnung 2. Die Differenz Δt, um welche die Abführungsöffnung 3 tiefer liegt, beträgt bei Strömungsabständen s von 300 m bis 700 m, vorzugsweise mindestens 20 m, bevorzugt mindestens 30 m und sehr bevorzugt zumindest 40 m.

Fig. 1 zeigt eine erste Erdwärmenutzungseinheit. Hier ist lediglich eine Zuführungsleitung 1 mit einer Austrittsöffnung 2 vorgesehen sowie eine Förderleitung 4 mit ihrer Abführungsöffnung 3 zum Abfördern des ausgeheizten Wärmeträgermediums. Es ist erkennbar, dass die Abführungsöffnung 3 um eine Differenz Δt tiefer liegt als die Austrittsöffnung 2. Bei der ersten Erdwärmenutzungseinheit könnten beispielsweise auch zwei Zuführungsleitungen 1 mit Austrittsöffnungen 2 und zwei Förderleitungen 4 mit Abführungsöffnungen 3 vorgesehen sein.

Die Fig. 2 und 3 zeigen eine zweite Erdwärmenutzungseinheit für die Durchführung des erfindungsgemäßen Verfahrens. In Fig. 2 ist erkennbar, dass zwei Zuführungsleitungen 1 vorgesehen sind. In einer Tiefe t, die im Ausführungsbeispiel 3.500 m betragen mag, tritt dann das über eine Zuführungsleitung 1 zugeführte Wärmeträgermedium über eine Mehrzahl von in jeweils einer linearen Reihe angeordneten Austrittsöffnungen 2 in das Erdreich aus. Vorzugsweise und im Ausführungsbeispiel sind die in einer linearen Reihe angeordneten Austrittsöffnungen 2 an lediglich einer einzigen Zuführungsleitung 1 angeschlossen. Zweckmäßigerweise ist eine nicht näher dargestellte rechenartige Anordnung von Zuführungsleitungen 1 und Austrittsöffnungen 2 bzw. den Austrittsöffnungen 2 zugeordnete, nicht dargestellten Austrittsleitungen vorgesehen. Dabei bildet die Zuführungsleitung 1 gleichsam den Rechenstiel und die Austrittsöffnungen 2 bzw. die nicht dargestellten, den Austrittsöffnungen 2 zugeordneten Austrittsleitungen bilden die Zinken des Rechens. Das Wärmeträgermedium strömt zu den ebenfalls in einer linearen Reihe angeordneten Abführungsöffnungen 3. Zweckmäßigerweise sind die in der linearen Reihe angeordneten Abführungsöffnungen 3 an lediglich einer einzigen Förderleitung 4 angeschlossen. Durch die Förderleitung 4 wird das erwärmte Wärmeträgermedium wieder an die Erdoberfläche 5 zurückbefördert. Vorzugsweise ist ebenfalls eine rechenartige Anordnung von Förderleitung 4 und Abführungsöffnungen 3 bzw. den Abführungsöffnungen 3 zugeordnete, nicht dargestellte Abführungsleitungen verwirklicht.

In Fig. 2 ist erkennbar, dass nach bevorzugter Ausführungsform die Abführungsöffnungen 3 tiefer liegen bzw. auf einem tieferen Niveau angeordnet sind als die Austrittsöffnungen 2. Vorzugsweise beträgt die Differenz Δt, um welche diese Abführungsöffnungen 3 tiefer liegen, bei einem Strömungsabstand 3 von 500 m mindestens 50 m. - In der Fig. 3 ist erkennbar, dass vorzugsweise und im Ausführungsbeispiel eine mittige lineare Reihe von Abführungsöffnungen 3 vorgesehen ist und dass rechts und links von dieser mittigen linearen Reihe jeweils eine lineare Reihe aus Austrittsöffnungen 2 angeordnet ist. Bevorzugt sind alle drei linearen Reihen parallel zueinander angeordnet. Die Länge I der Reihen von Austrittsöffnungen 2 bzw. Abführungsöffnungen 3 beträgt vorzugsweise und im Ausführungsbeispiel 1.000 m. Der Fig. 3 ist auch entnehmbar, dass die Austrittsöffnungen 2 bzw. die Abführungsöffnungen 3 in den linearen Reihen gleichmäßig verteilt sind und gleiche Abstände zueinander aufweisen. Nach besonders bevorzugter Ausführungsform und im Ausführungsbeispiel ist eine Austrittsöffnung 2 einer linearen Reihe jeweils einer Abführungsöffnung 3 zugeordnet.

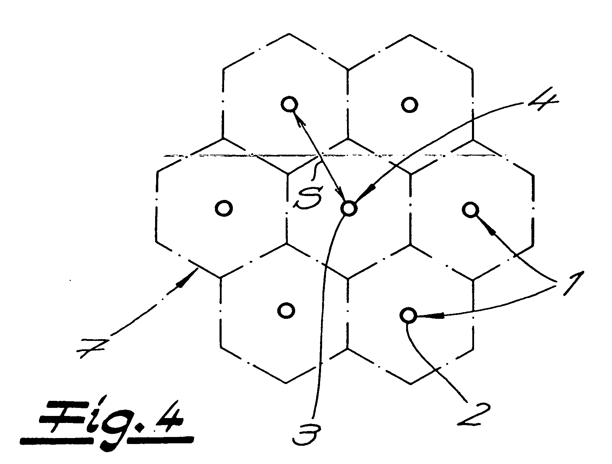

Der in Fig. 2 dargestellte Schnitt trifft auch auf die dritte Erdwärmenutzungseinheit zu. Fig. 4 zeigt aber, dass die Leitungen bzw. Öffnungen hier anders angeordnet sind als bei der zweiten Erdwärmenutzungseinheit. Bei der dritten Erdwärmenutzungseinheit sind mehrere Zuführungsleitungen 1 bzw. ihre Austrittsöffnungen 2 um eine Förderleitung 4 bzw. um ihre Abführungsöffnung 3 herum verteilt angeordnet. Zweckmäßigerweise und im Ausführungsbeispiel befinden sich alle Austrittsöffnungen 2 in derselben Tiefe t. Die Abführungsöffnung 3 liegt tiefer bzw. liegt auf einem tieferen Niveau als die Austrittsöffnungen 2. Die Differenz Δt, um welche diese Abführungsöffnung 3 tiefer liegt, beträgt bei einem Strömungsabstand s von 500 m, bevorzugt mindestens 50 m.

In der Fig. 2 ist erkennbar, dass sowohl die Förderleitung 4 als auch die Zuführungsleitungen 1 vertikal in das Erdreich eingebracht sind. Nach besonders bevorzugter Ausführungsform und im Ausführungsbeispiel nach Fig. 4 sind die Leitungen bzw. deren Öffnungen mit der Maßgabe angeordnet, dass die Förderleitung 4 und/oder ihre Abführungsöffnung 3 bezüglich einer (gedachten) horizontalen Schnittfläche/Schnittebene den Mittelpunkt eines mittleren Polygons 7 bildet. Die Zuführungsleitungen 1 und/oder ihre Austrittsöffnungen 2 bilden jeweils den Mittelpunkt eines identischen äußeren Polygons 7. Die äußeren Polygone 7 grenzen dabei an das mittlere Polygon 7 unmittelbar an. Fig. 4 zeigt eine Draufsicht auf die genannte Schnittfläche/Schnittebene und die Polygone 7 sind hier als Sechsecke ausgebildet. Mit anderen Worten bildet hier die Förderleitung 4 bzw. ihre Abführungsöffnung 3 den Mittelpunkt eines Kreises und auf dem Kreis sind die Zuführungsleitungen 1 bzw. deren Austrittsöffnungen 2 angeordnet. In Fig. 4 ist auch erkennbar, dass es im Rahmen der Erfindung liegt, dass das mittlere Polygon 7 mit der Abführungsöffnung 3 von den äußeren Polygonen 7 mit den Austrittsöffnungen 2 vollständig umgeben wird.

## Patentansprüche

1. Verfahren zur Nutzung von Erdwärme, insbesondere zur Stromerzeugung, wobei ein Wärmeträgermedium durch Zuführungsleitungen (1) in das Erdreich eingeführt wird und aus Austrittsöffnungen (2) der Zuführungsleitungen (1) in das Erdreich austritt,
wobei das Wärmeträgermedium von den Austrittsöffnungen (2) über einen Strömungsabstand s das Erdreich durchdringend zu Abführungsöffnungen (3) von Förderleitungen (4) geführt wird und von den Förderleitungen (4) abgefördert wird,
wobei das Wärmeträgermedium durch eine erste Erdwärmenutzungseinheit führbar ist, in der zumindest eine Austrittsöffnung (2) und zumindest eine Abführungsöffnung (3) auf unterschiedlich tiefem Niveau angeordnet sind,
wobei das Wärmeträgermedium durch eine zweite Erdwärmenutzungseinheit führbar ist,
wobei das Wärmeträgermedium durch eine dritte Erdwärmenutzungseinheit führbar ist,
und wobei das Wärmeträgermedium durch zumindest zwei der Erdwärmenutzungseinheiten alternierend geführt wird,
**dadurch gekennzeichnet,**
**dass** in der zweiten Erdwärmenutzungseinheit zumindest drei Austrittsöffnungen (2) in einer linearen Reihe angeordnet sind und/oder in der zumindest drei Abführungsöffnungen (3) in einer linearen Reihe angeordnet sind,
**dass** in der dritten Erdwärmenutzungseinheit zumindest drei Austrittsöffnungen (2) um eine Abführungsöffnung (3) mit jeweils gleichem Strömungsabstand s zur Abführungsöffnung (3) verteilt angeordnet sind und/oder in der zumindest drei Abführungsöffnungen (3) um eine Austrittsöffnung (2) mit jeweils gleichem Strömungsabstand s zur Austrittsöffnung (2) verteilt angeordnet sind.

2. Verfahren nach Anspruch 1, **dadurch gekennzeichnet, dass** das Wärmeträgermedium alternierend durch alle drei Erdwärmenutzungseinheiten geführt wird.

3. Verfahren nach einem der Ansprüche 1 oder 2, **dadurch gekennzeichnet, dass** das Wärmeträgermedium mit der Maßgabe alternierend durch die Erdwärmenutzungseinheiten geführt wird, dass die Menge der pro Zeiteinheit gewonnenen Erdwärme dem Energiebedarf angepasst wird.

4. Verfahren nach einem der Ansprüche 1 bis 3, **dadurch gekennzeichnet, dass** der Strömungsabstand s von einer Austrittsöffnung (2) zu der zugeordneten Abführungsöffnung (3) 200 m bis 800 m, vorzugsweise 300 m bis 700 m, beträgt.

5. Verfahren nach einem der Ansprüche 1 bis 4, **dadurch gekennzeichnet, dass** die Abführungsöffnung (3) der ersten Erdwärmenutzungseinheit auf tieferem Niveau angeordnet ist als die Austrittsöffnung (2).

6. Verfahren nach einem der Ansprüche 1 bis 5, **dadurch gekennzeichnet, dass** zwischen Austrittsöffnung (2) und Abführungsöffnung (3) eine Tiefendifferenz Δt vorgesehen ist, die zumindest ein Zwanzigstel des Strömungsabstandes s beträgt.

7. Verfahren nach einem der Ansprüche 1 bis 6, **dadurch gekennzeichnet, dass** das Wärmeträgermedium in der zweiten Erdwärmenutzungseinheit über mehr als drei in einer linearen Reihe angeordneten Austrittsöffnungen (2) in das Erdreich austritt und dass das Wärmeträgermedium von den Austrittsöffnungen (2) über den Strömungsabstand s das Erdreich durchdringend zu mehr als drei in einer linearen Reihe angeordneten Abführungsöffnungen (3) geführt wird.

8. Verfahren nach einem der Ansprüche 1 bis 7, **dadurch gekennzeichnet, dass** zumindest eine lineare Reihe von Austrittsöffnungen (2) parallel oder im Wesentlichen parallel zu zumindest einer linearen Reihe von Abführungsöffnungen (3) angeordnet wird.

9. Verfahren nach einem der Ansprüche 1 bis 8, **dadurch gekennzeichnet, dass** eine mittige lineare Reihe von Abführungsöffnungen (3) vorgesehen wird und dass rechts und links von dieser mittigen linearen Reihe jeweils eine lineare Reihe von Austrittsöffnungen (2) vorgesehen wird.

10. Verfahren nach einem der Ansprüche 1 bis 9, **dadurch gekennzeichnet, dass** mehr als drei Austrittsöffnungen (2) um eine Abführungsöffnung (3) mit jeweils gleichem Strömungsabstand s zur Abführungsöffnung (3) verteilt angeordnet sind.

## Claims

1. A method for utilizing geothermal heat, in particular for power generation, wherein a heat transfer medium is inserted into the ground by means of supply lines (1) and escapes from outlet openings (2) of the supply lines (1) into the ground,
wherein the heat transfer medium is guided from the outlet openings (2) via a flow distance s to discharge openings (3) of feed lines (4) so as to penetrate the ground and is removed by the feed lines (4),
wherein the heat transfer medium can be guided through a first geothermal heat user unit, in which at least one outlet opening (2) and at least one discharge opening (3) are arranged at a level having different depths,
wherein the heat transfer medium can be guided through a second geothermal heat user unit,
wherein the heat transfer medium can be guided through a third geothermal heat user unit,
and wherein the heat transfer medium is guided through at least two of the geothermal heat user units in an alternating manner,
**characterized in**
**that** at least three outlet openings (2) are arranged in a linear row in the second geothermal heat user unit and/or in which at least three discharge openings (3) are arranged in a linear row,
**that** in the third geothermal heat user unit at least three outlet openings (2) are arranged so as to be distributed around a discharge opening (3), in each case comprising the same flow distance s to the discharge opening (3) and/or in which at least three discharge openings (3) are arranged so as to be distributed around an outlet opening (2), in each case comprising the same flow distance s to the outlet opening (2).

2. The method according to claim 1, **characterized in that** the heat transfer medium is guided through all three geothermal heat user units in an alternating manner.

3. The method according to one of claims 1 or 2, **characterized in that** the heat transfer medium is guided through the geothermal heat user unit in an alternating manner, provided that the quantity of the geothermal heat extracted per time unit is adapted to the power demand.

4. The method according to one of claims 1 to 3, **characterized in that** the flow distance s from an outlet opening (2) to the assigned discharge opening (3) is from 200 m to 800 m, preferably from 300 m to 700 m.

5. The method according to one of claims 1 to 4, **characterized in that** the discharge opening (3) of the first geothermal heat user unit is arranged at a lower level than the outlet opening (2).

6. The method according to one of claims 1 to 5, **characterized in that** provision is made between the outlet opening (2) and the discharge opening (3) for a depth difference At, which is at least one-twentieth of the flow distance s.

7. The method according to one of claims 1 to 6, **characterized in that** the heat transfer medium in the second geothermal heat user unit escapes into the ground via more than three outlet openings (2) arranged in a linear row and **in that** the heat transfer medium is guided from the outlet openings (2) via the flow distance s to more than three discharge openings (3), which are arranged in a liner row so as to penetrate the ground.

8. The method according to one of claims 1 to 7, **characterized in that** at least one linear row of outlet openings (2) is arranged parallel or substantially parallel to at least one linear row of discharge openings (3).

9. The method according to one of claims 1 to 8, **characterized in that** provision is made for a central linear row of discharge openings (3) and **in that**, in each case, provision is made for a linear row of outlet openings (2) to the right and the left of said central linear row.

10. The method according to one of claims 1 to 9, **characterized in that** more than three outlet openings (2) are arranged so as to be distributed around a discharge opening (3), in each case comprising the same flow distance s to the discharge opening (3).

## Revendications

1. Procédé pour l'exploitation géothermique, en particulier pour la production de courant électrique, un fluide caloporteur étant introduit dans le sol par des conduites d'amenées (1) et ressortant dans le sol par des orifices de sortie (2) des conduites d'amenée (1),
le fluide caloporteur étant guidé depuis les orifices de sortie (2) à une distance d'écoulement s en traversant le sol en direction d'orifices d'évacuation (3) de conduites de transport (4) et est évacué par les conduites de transport (4),
le fluide caloporteur étant guidable à travers une première unité de géothermie dans laquelle sont disposés au moins un orifice de sortie (2) et au moins un orifice d'évacuation (3) à différents niveaux de profondeur,
le fluide caloporteur étant guidable à travers une seconde unité de géothermie,
le fluide caloporteur étant guidable à travers une troisième unité de géothermie
et le fluide caloporteur étant guidé à travers au moins deux des unités de géothermie en alternance,
**caractérisé en ce que**
qu'au moins trois orifices de sortie (2) sont disposés dans la seconde unité de géothermie sur une rangée linéaire, et/ou au moins trois orifices d'évacuation (3) sont disposés sur une rangée linéaire,
**en ce que** dans la troisième unité de géothermie, au moins trois orifices de sortie (2) sont disposés en étant répartis autour d'un orifice d'évacuation (3) avec respectivement la même distance d'écoulement s par rapport à l'orifice d'évacuation (3) et/ou dans laquelle au moins trois orifices d'évacuation (3) sont disposes de manière répartie autour d'un orifice de sortie (2) avec respectivement la même distance d'écoulement s par rapport à l'orifice de sortie (2).

2. Procédé selon la revendication 1, **caractérisé en ce que** le fluide caloporteur est guidé en alternance à travers toutes les trois unités de géothermie.

3. Procédé selon l'une des revendications 1 ou 2, **caractérisé en ce que** le fluide caloporteur est guidé en alternance à travers les unités de géothermie de sorte que la quantité de la chaleur géothermique récupérée par unité de temps est adaptée au besoin énergétique.

4. Procédé selon l'une des revendications 1 à 3, **caractérisé en ce que** la distance d'écoulement s entre un orifice de sortie (2) et l'orifice d'évacuation associé (3) est comprise entre 200 m et 800 m, de préférence entre 300 et 700 m.

5. Procédé selon l'une des revendications 1 à 4, **caractérisé en ce que** l'orifice d'évacuation (3) de la première unité de géothermie est à un niveau plus bas que l'orifice de sortie (2).

6. Procédé selon l'une des revendications 1 à 5, **caractérisé en ce qu'**entre l'orifice de sortie (2) et l'orifice d'évacuation (3), il est prévu une différence e profondeur Δt qui représente au moins un vingtième de la distance d'écoulement s.

7. Procédé selon l'une des revendications 1 à 6, **caractérisé en ce que** le fluide caloporteur dans la seconde unité de géothermie sort dans le sous-sol par plus que trois orifices de sortie (2) disposés sur une rangée linéaire et **en ce que** le fluide caloporteur est guidé depuis les orifices de sortie (2) sur la distance d'écoulement s en traversant le sous-sol en direction de plus que trois orifices d'évacuation (3) disposés sur une rangée linéaire.

8. Procédé selon l'une des revendications 1 à 7, **caractérisé en ce qu'**au moins une rangée linéaire d'orifices de sortie (2) est disposée parallèlement ou sensiblement parallèlement à au moins une rangée linéaire d'orifices d'évacuation (3).

9. Procédé selon l'une des revendications 1 à 8, **caractérisé en ce qu'**une rangée linéaire médiane d'orifices d'évacuation (3) est prévue et **en ce qu'**à droite et à gauche de cette rangée linéaire médiane, il est prévu respectivement une rangée linéaire d'orifices de sortie (2).

10. Procédé selon l'une des revendications 1 à 9, **caractérisé en ce que** plus de trois orifices de sortie (2) sont disposés en étant répartis autour d'un orifice d'évacuation (3) avec respectivement la même distance d'écoulement s par rapport à l'orifice d'évacuation (3)
